(19) Europäisches Patentamt
European Patent Office
Office européen des brevets

(11) **EP 4 734 057 A1**

(12) **EUROPEAN PATENT APPLICATION**
published in accordance with Art. 153(4) EPC

(43) Date of publication:
**29.04.2026 Bulletin 2026/18**

(21) Application number: **24854380.3**

(22) Date of filing: **06.08.2024**

(51) International Patent Classification (IPC):
**G06T 7/50** (2017.01)    **G06T 7/269** (2017.01)
**G06T 3/18** (2024.01)    **G06T 7/13** (2017.01)
**G06N 3/04** (2023.01)    **G06T 7/593** (2017.01)
**G06T 7/20** (2017.01)

(52) Cooperative Patent Classification (CPC):
**G06N 3/04; G06T 3/18; G06T 7/13; G06T 7/20;**
**G06T 7/269; G06T 7/50; G06T 7/593**

(86) International application number:
**PCT/KR2024/011623**

(87) International publication number:
**WO 2025/037828 (20.02.2025 Gazette 2025/08)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **11.08.2023 KR 20230105861**
**30.05.2024 KR 20240071098**

(71) Applicants:
• **Samsung Electronics Co., Ltd.**
**Suwon-si, Gyeonggi-do 16677 (KR)**
• **Korea Advanced Institute of Science and
Technology**
**Daejeon 34141 (KR)**

(72) Inventors:
• **PARK, Woonsung**
**Suwon-si, Gyeonggi-do 16677 (KR)**
• **JUAN LUIS, Gonzalez Bello**
**Daejeon 34141 (KR)**
• **KIM, Mun Churl**
**Daejeon 34141 (KR)**
• **SONG, Wonseok**
**Suwon-si, Gyeonggi-do 16677 (KR)**
• **MOON, Youngsu**
**Suwon-si, Gyeonggi-do 16677 (KR)**

(74) Representative: **Gulde & Partner**
**Patent- und Rechtsanwaltskanzlei mbB**
**Berliner Freiheit 2**
**10785 Berlin (DE)**

(54) **ELECTRONIC DEVICE AND CONTROL METHOD THEREFOR**

(57)    An electronic device may include: a memory storing one or more instructions; and at least one processor, wherein at least one processor is configured to execute the instructions and to cause the electronic device to: obtain optical flow edge information on the basis of optical flow information corresponding to an input image; obtain warped depth information on the basis of depth information of the input image; and obtain depth information corresponding to the input image by inputting the input image, the optical flow edge information, and the warped depth information to a first network model.

**FIG. 3**

START

OBTAIN OPTICAL FLOW EDGE INFORMATION BASED ON OPTICAL FLOW INFORMATION CORRESPONDING TO AN INPUT IMAGE — S310

OBTAIN WARPED DEPTH INFORMATION BASED ON DEPTH INFORMATION OF THE INPUT IMAGE — S320

OBTAIN DEPTH INFORMATION CORRESPONDING TO THE INPUT IMAGE BY INPUTTING THE INPUT IMAGE, THE OPTICAL FLOW EDGE INFORMATION, AND THE WARPED DEPTH INFORMATION INTO A FIRST ARTIFICIAL INTELLIGENCE MODEL — S330

END

EP 4 734 057 A1

**Description**

[Technical Field]

The disclosure relates to an electronic apparatus and a control method therefor, and for example, to an electronic apparatus that estimates depth information of an image, and a control method therefor.

[Background Art]

Depth estimation (DE) is a process of mapping pixels of an input image to a corresponding depth value, and may be used in various fields from navigation and robot manipulation to an augmented reality (AR) effect and 3D reconstruction.

[Disclosure of Invention]

[Solution to Problem]

An electronic apparatus according to one or more embodiments includes memory storing at least one instruction, and at least one processor, wherein the at least one processor is configured to, by executing the at least one instruction, obtain optical flow edge information based on optical flow information corresponding to an input image, obtain warped depth information based on depth information of the input image, and obtain depth information corresponding to the input image by inputting the input image, the optical flow edge information, and the warped depth information into a first network model.

According to one or more embodiments, the at least one processor may, by executing the at least one instruction, obtain the optical flow edge information based on a value obtained by differentiating the first derivative of the optical flow information and a value obtained by differentiating the second derivative of the optical flow information.

According to one or more embodiments, the at least one processor may, by executing the at least one instruction, obtain a first value by normalizing a first derivative value obtained by differentiating the first derivative of horizontal optical flow information, obtain a second value by normalizing a second derivative value obtained by differentiating the second derivative of the horizontal optical flow information, obtain a third value by normalizing a third derivative value obtained by differentiating the first derivative of vertical optical flow information, obtain a fourth value by normalizing a fourth derivative value obtained by differentiating the second derivative of the vertical optical flow information, and obtain the optical flow edge information based on the first value, the second value, the third value, and the fourth value.

According to one or more embodiments, the at least one processor may, by executing the at least one instruction, obtain the optical flow edge information based on a fifth value obtained by binarizing the first value, a sixth value obtained by binarizing the second value, a seventh value obtained by binarizing the third value, and an eighth value obtained by binarizing the fourth value.

According to one or more embodiments, the at least one processor may, by executing the at least one instruction, obtain first optical flow edge information by applying an OR gate to the fifth value and the seventh value, and obtain second optical flow edge information by applying an OR gate to the sixth value and the eighth value. The first optical flow edge information may include depth gradients information, and the second optical flow edge information may include information focused on object boundaries.

According to one or more embodiments, the at least one processor may, by executing the at least one instruction, obtain the warped depth information by warping depth information estimated in the previous frame to the current frame based on optical flow information corresponding to the current frame.

According to one or more embodiments, the at least one processor may, by executing the at least one instruction, while training of the first network model is proceeding, reduce depth estimation dependency for the optical flow edge information and the warped depth information by randomly dropping out at least one of optical flow edge information for training or warped depth information for training.

According to one or more embodiments, the at least one processor may, by executing the at least one instruction, obtain camera pose information by inputting the previous frame, the current frame, and the next frame into a second network model, and train a parameter of the first network model based on the obtained camera pose information.

According to one or more embodiments, the at least one processor may, by executing the at least one instruction, obtain warped pose information through forward warping for the camera pose information, obtain warped depth information through forward warping for the depth information corresponding to the input image, and train the parameter of the first network model based on the warped pose information and the warped depth information.

According to one or more embodiments, the at least one processor may, by executing the at least one instruction, synthesize the previous frame and the next frame based on the warped pose information and the warped depth information, and train the parameter of the first network model based on a first loss value between the previous frame and the synthesized previous frame and a second loss value between the next frame and the synthesized next frame.

A control method for an electronic apparatus according to one or more embodiments includes the steps of obtaining optical flow edge information based on optical flow information corresponding to an input image, obtaining warped depth information based on depth information of the input image, and obtaining depth information corresponding to the input image by inputting the input image, the optical flow edge information, and the warped depth information into a first network model.

In a non-transitory computer-readable medium storing computer instructions that, when executed by a processor of an electronic apparatus, cause the electronic apparatus to perform operations according to one or more embodiments, the operations include the steps of obtaining optical flow edge information based on optical flow information corresponding to an input image, obtaining warped depth information based on depth information of the input image, and obtaining depth information corresponding to the input image by inputting the input image, the optical flow edge information, and the warped depth information into a first network model.

[Brief Description of Drawings]

The above-described and other aspects, features, and advantages of certain embodiments of the present disclosure will be more apparent from the following detailed description, taken in conjunction with the accompanying drawings, in which:

FIG. 1A and FIG. 1B are diagrams illustrating an example method of estimating depth of an input image according to various embodiments;

FIG. 2A is a block diagram illustrating an example configuration of an electronic apparatus according to various embodiments;

FIG. 2B is a block diagram illustrating an example configuration of an electronic apparatus according to various embodiments;

FIG. 3 is a flowchart illustrating an example method of obtaining depth information according to various embodiments;

FIG. 4A and FIG. 4B are diagrams illustrating an example method of estimating depth according to various embodiments;

FIG. 5 is a diagram illustrating an example operation of an electronic apparatus according to various embodiments;

FIG. 6 is a diagram illustrating an example operation of an electronic apparatus according to various embodiments;

FIG. 7 is a diagram illustrating an example method of obtaining optical flow edge information according to various embodiments;

FIG. 8 is a diagram illustrating an example method of obtaining depth information according to various embodiments;

FIG. 9 is a diagram illustrating an example operation of a pose estimation module according to various embodiments;

FIG. 10 is a diagram illustrating an example operation of an image synthesis module according to various embodiments; and

FIGS. 11A, 11B, 11C, 12A, 12B and 12C are diagrams for illustrating an example effect according to various embodiments.

[Mode for Invention]

Terms used in this disclosure will be described briefly, and then the disclosure will be described in greater detail.

As terms used in the disclosure, general terms that are currently used widely were selected as far as possible, in consideration of the functions described in the disclosure. However, the terms may vary depending on the intention of those skilled in the art who work in the pertinent field or previous court decisions, or emergence of new technologies, etc. In some cases, there may be terms that may have been arbitrarily selected, and in such cases, the meaning of the terms will be described in detail in the relevant descriptions in the disclosure. Accordingly, the terms used in the disclosure should be defined based on the meaning of the terms and the overall content of the disclosure, not just based on the names of the terms.

In the disclosure, expressions such as "have," "may have," "include," and "may include" denote the existence of such characteristics (e.g.: elements such as numbers, functions, operations, and components), and do not exclude the existence of additional characteristics.

In the disclosure, the expressions "A or B," "at least one of A and/or B," or "one or more of A and/or B" and the like may include all possible combinations of the listed items. For example, "A or B," "at least one of A and B," or "at least one of A or B" may refer to all of the following cases: (1) including only A, (2) including only B, or (3) including both A and B.

The expressions "first," "second," and the like used in this disclosure may describe various elements regardless of any order and/or degree of importance. Further, such expressions are used simply to distinguish one element from another element, and are not intended to limit the elements.

The description in the disclosure that one element (e.g.: a first element) is "(operatively or communicatively) coupled with/to" or "connected to" another element (e.g.: a second element) should be interpreted to include both the case where the one element is directly coupled to the another element, and the case where the one element is coupled to the another element through still another element (e.g.: a third element).

The expression "configured to" used in the disclosure may be interchangeably used with other expressions such as "suitable for," "having the capacity to," "designed to," "adapted to," "made to," and "capable of," depending on cases. The term "configured to" may not necessarily refer to a device being "specifically designed to" in terms of hardware.

Under some circumstances, the expression "a device configured to" may refer, for example, to the device "is capable of" performing an operation together with another device or component. For example, the phrase "a processor configured to perform A, B, and C" may refer, for example, to a dedicated processor (e.g.: an embedded processor) for performing the corresponding operations, or a generic-purpose processor (e.g.: a CPU or an application processor) that can perform the corresponding operations by executing one or more software programs stored in a memory device.

Singular expressions include plural expressions, unless defined differently in the context. In the disclosure, terms such as "include" and "consist of" should be understood as designating that there are such characteristics, numbers, steps, operations, elements, components, or a combination thereof described in the disclosure, but not as excluding in advance the existence or possibility of adding one or more of other characteristics, numbers, steps, operations, elements, components, or a combination thereof.

In the disclosure, "a module" or "a part" performs at least one function or operation, and may be implemented as hardware or software, or as a combination of hardware and software. Also, a plurality of "modules" or "parts" may be integrated into at least one module and implemented as at least one processor (not shown), except "a module" or "a part" that needs to be implemented as specific hardware.

Various elements and areas in drawings were illustrated schematically. Accordingly, the disclosure is not limited by the relative sizes or intervals illustrated in the accompanying drawings.

Hereinafter, various example embodiments of the disclosure will be described in greater detail with reference to the accompanying drawings.

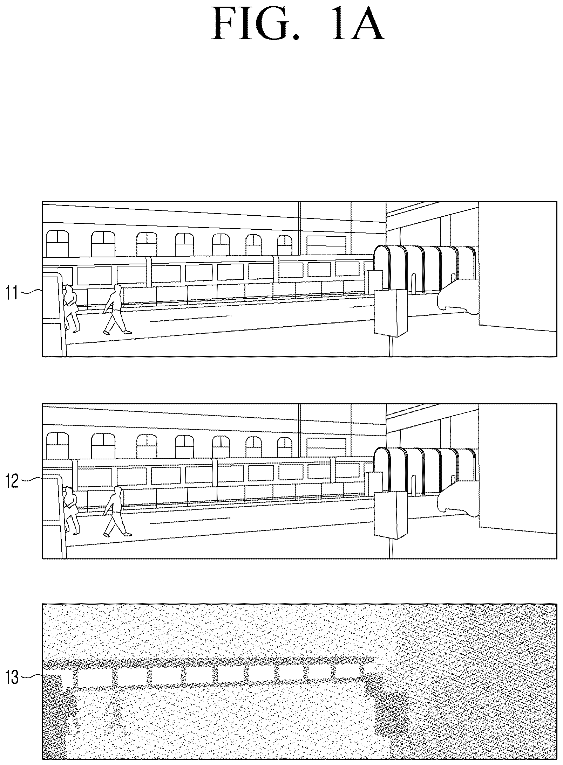

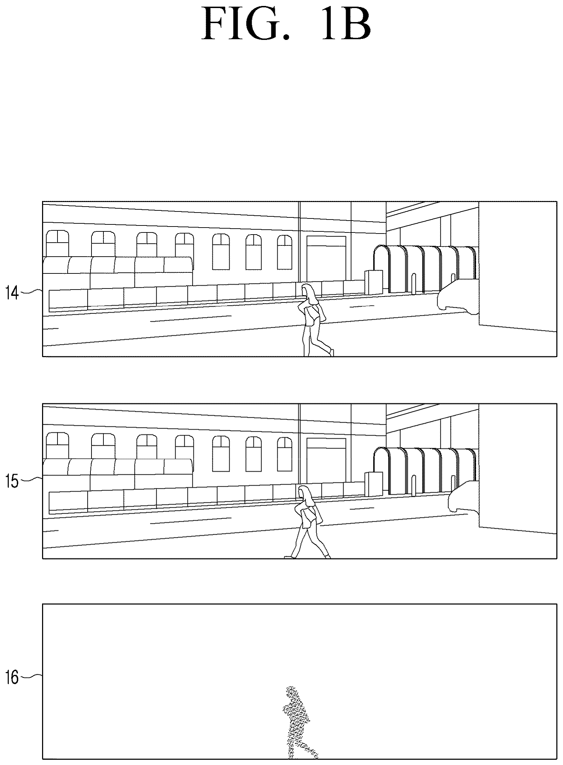

FIG. 1A and FIG. 1B are diagrams illustrating an example method of estimating depth of an input image according to various embodiments.

Optical flow estimation (OFE) predicts locations of corresponding pixels between two images densely, and recently, deep-learning-based methods are being used. Optical flow estimation may be used in various applications from video compression and frame interpolation to object tracking and motion recognition, etc.

Depth estimation (DE), e.g., single-view depth estimation is a task of mapping each pixel of a single input image to a corresponding depth value, and may be used in various fields from navigation and robot manipulation to an augmented reality (AR) effect and 3D reconstruction. A depth estimation task can obtain a result of increased attention and high quality when learning is performed by a self-supervised manner only with images. In particular, as a single camera video can be easily obtained, it is important to learn depth estimation in a mono video. However, if depth estimation is learned in a mono video, an additional task of estimating a camera posture and having to correctly estimate ambiguous depth for a moving object exists.

In a moving camera sequence, an optical flow may be intuitively connected with depth. An optical flow size 13 of an object that independently moves (or a rigid flow) 11, 12 is closely related to depth as illustrated in FIG. 1A. However, in a raw optical flow, as a moving object has ambiguous depth (based on an overflow), assumption of a fixed scene is invalidated, and thus depth estimation cannot be trusted. In other words, a fast moving object gets to have a big overflow regardless of distance from the camera. However, as illustrated in FIG. 1B, a static camera sequence 14, 15 does not cause a rigid flow 16. Due to such a problem, a depth estimation network has a problem that prediction accuracy may be reduced as it performs wrong pre-learning based on an overflow.

Accordingly, hereinafter, various embodiments for improving depth estimation performance using an optical flow as input of a depth estimation network will be explained in greater detail with reference to the figures.

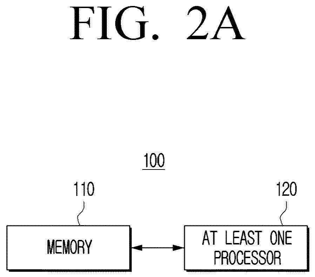

FIG. 2A is a block diagram illustrating an example configuration of an electronic apparatus according to various embodiments.

According to FIG. 2A, an electronic apparatus 100 includes memory 110 and at least one processor 120.

The electronic apparatus 100 may be implemented as various types of display devices such as a TV, a monitor, a PC, a kiosk, a tablet PC, an electronic photo frame, a mobile phone, a head mounted display (HMD), a near eye display (NED), a large format display (LFD), digital signage, a digital information display (DID), a video wall, a projector display etc., and/or an image processing device that provides images to a display device (e.g., a set-top box, a one connected box).

The memory 110 may store data necessary for various embodiments. The memory 110 may be implemented in a form of memory embedded in the electronic apparatus 100, or implemented in a form of memory that can be attached to or detached from the electronic apparatus 100 according to the use of stored data. For example, in the case of data for driving the electronic apparatus 100, the data may be stored in memory embedded in the electronic apparatus 100, and in the case of data for an extended function of the electronic apparatus 100, the data may be stored in memory that can be attached to or detached from the electronic apparatus 100. In the case of memory embedded in the electronic apparatus 100, the memory may be implemented as at least one of volatile memory (e.g.: dynamic RAM (DRAM), static RAM (SRAM), or synchronous dynamic RAM (SDRAM), etc.) or non-volatile memory (e.g.: one time programmable ROM (OTPROM), programmable ROM (PROM), erasable and programmable ROM (EPROM), electrically erasable and programmable ROM (EEPROM), mask ROM, flash ROM, flash memory (e.g.: NAND flash or NOR flash, etc.), a hard drive, or a solid state drive (SSD)). Also, in the case of memory that can be attached to or detached from the electronic apparatus 100, the memory may be implemented in forms such as a memory card (e.g., compact flash (CF), secure digital (SD), micro secure digital (Micro-SD), mini secure digital (Mini-SD), extreme digital (xD), a multi-media card (MMC), etc.) and external memory that can be connected to a USB port (e.g., a USB memory), etc.

According to an embodiment, the memory 110 may store at least one instruction or a computer program including instructions for controlling the electronic apparatus 100.

According to an embodiment, the memory 110 may store an image received from an external device (e.g., a source device), an external storage medium (e.g., a USB), an external server (e.g., a webhard), etc., e.g., an input image. Alternatively, the memory 110 may store an image obtained through a camera provided on the electronic apparatus 100. Here, the image may be a 2D moving image, but is not limited thereto.

According to an embodiment, the memory 110 may store various types of information necessary for image quality processing, e.g., information, an algorithm, an image quality parameter, etc. for performing at least one of noise reduction, detail enhancement, tone mapping, contrast enhancement, color enhancement, or frame rate conversion. Also, the memory 110 may store an intermediate image generated by image processing, and an image generated based on depth information.

According to an embodiment, the memory 110 may be implemented as a single memory storing data generated in various operations according to the disclosure. However, according to an embodiment, the memory 110 may be implemented to include a plurality of memories that respectively store different types of data, or respectively store data generated in different steps.

In the aforementioned embodiments, it was explained that various types of data are stored in external memory 110 of the processor 120, but at least some of the aforementioned data may be stored in internal memory of the processor 120 according to at least one implementation example of the electronic apparatus 100 or the processor 120.

The at least one processor 120 controls the overall operations of the electronic apparatus 100. For example, the at least one processor 120 may be connected with each component of the electronic apparatus 100, and control the overall operations of the electronic apparatus 100. For example, the at least one processor 120 may be operatively connected with the memory 110, and control the overall operations of the electronic apparatus 100. The at least one processor 120 may include of one or a plurality of processors.

The at least one processor 120 may perform the operations of the electronic apparatus 100 according to the various embodiments by executing the at least one instruction stored in the memory 110.

The at least one processor 120 may include one or more of a central processing unit (CPU), a graphics processing unit (GPU), an accelerated processing unit (APU), a many integrated core (MIC), a digital signal processor (DSP), a neural processing unit (NPU), a hardware accelerator, or a machine learning accelerator. The at least one processor 120 may control one or a random combination of the other components of the electronic apparatus, and perform an operation related to communication or data processing. Also, the at least one processor 120 may execute one or more programs or instructions stored in the memory. For example, the at least one processor 120 may perform the method according to one or more embodiments of the disclosure by executing the one or more instructions stored in the memory.

In case the method according to one or more embodiments of the disclosure includes a plurality of operations, the plurality of operations may be performed by one processor, or performed by a plurality of processors. For example, when a first operation, a second operation, and a third operation are performed by the method according to one or more embodiments, all of the first operation, the second operation, and the third operation may be performed by a first processor, or the first operation and the second operation may be performed by the first processor (e.g., a generic-purpose processor), and the third operation may be performed by a second processor (e.g., an artificial intelligence-dedicated processor).

The at least one processor 120 may be implemented as a single core processor including one core, or it may be implemented as one or more multicore processors including a plurality of cores (e.g., multicores of the same kind or multicores of different kinds). In case the at least one processor 120 is implemented as multicore processors, each of the plurality of cores included in the multicore processors may include internal memory of the processor such as cache memory, on-chip memory, etc., and common cache shared by the plurality of cores may be included in the multicore processors. Also, each of the plurality of cores (or some of the plurality of cores) included in the multicore processors may independently read a program instruction for implementing the method according to one or more embodiments of the disclosure and perform the instruction, or the plurality of entire cores (or some of the cores) may be linked with one another, and read a program instruction for implementing the method according to one or more embodiments of the disclosure and perform the instruction.

In case the method according to one or more embodiments of the disclosure includes a plurality of operations, the plurality of operations may be performed by one core among the plurality of cores included in the multicore processors, or they may be performed by the plurality of cores. For example, when the first operation, the second operation, and the third operation are performed by the method according to one or more embodiments, all of the first operation, the second operation, and the third operation may be performed by a first core included in the multicore processors, or the first operation and the second operation may be performed by the first core included in the multicore processors, and the third operation may be performed by a second core included in the multicore processors.

In various embodiments of the disclosure, the processor may refer, for example, to a system on chip (SoC) wherein at least one processor and other electronic components are integrated, a single core processor, a multicore processor, or a core included in the single core processor or the multicore processor. The core may be implemented as a CPU, a GPU, an APU, a MIC, a DSP, an NPU, a hardware accelerator, or a machine learning accelerator, etc., but embodiments of the disclosure are not limited thereto. Hereinafter, the at least one processor 120 will be referred to as the processor 120, for the convenience of explanation.

According to an embodiment, the electronic apparatus 100 may receive various compressed images or images of various resolutions. For example, the electronic apparatus 100 may receive images in compressed forms such as moving picture experts group (MPEG) (e.g., MP2, MP4, MP7, etc.), joint photographic coding experts group (JPEG), advanced video coding (AVC), H.264, H.265, high efficiency video codec (HEVC), etc. Alternatively, the electronic apparatus 100 may receive any one image among standard definition (SD), high definition (HD), full HD, and ultra HD images.

According to an embodiment, the processor 120 may obtain depth information from an input image. Here, the input image may include a still image, a plurality of consecutive still images (or frames), or a moving image. For example, the input image may be a 2D image.

The depth information may be in a form of a depth map. The depth map indicates three-dimensional distance information of an object existing in an image, and it may be granted for each pixel of the image. According to an embodiment, an expression range of bit depth of 8bit may have a grayscale value from 0 to 255. For example, when indicating based on black/white colors, a black color (a low value) may indicate a place far from a viewer (or a camera), and a white color (a high value) may indicate a place close to the viewer. However, this is merely an example, and the depth map may be expressed with various bit depth (e.g., 9-bit, 10-bit, etc.) values according to various standards.

According to an embodiment, the processor 120 may obtain a depth map from a 2D input image based on a trained network model, etc. For example, the network model may be implemented as a neural network including a plurality of neural network layers. The network model may be implemented as a deep neural network (DNN), a convolutional neural network (CNN), a recurrent neural network (RNN), a restricted Boltzmann Machine (RBM), a deep belief network (DBN), a bidirectional recurrent deep neural network (BRDNN), or deep Q-networks, etc., but is not limited thereto.

According to an embodiment, the processor 120 may perform image processing for the input image, and then obtain depth information based on the image that went through image processing. Here, the image processing may be digital image processing including at least one of image enhancement, image restoration, image transformation, image analysis, image understanding, image compression, image decoding, or scaling.

According to an embodiment, various types of pre-processing may be performed before obtaining depth information for an input image. However, hereinafter, an input image and a pre-processed image will not be distinguished, but will be referred to as an input image, for the convenience of explanation.

In the disclosure, "a region" may refer to a portion of an image, and may refer, for example, to at least one pixel block or a gathering of pixel blocks. A pixel block may refer, for example, to a gathering of adjacent pixels including at least one pixel.

The processor 120 may obtain depth information corresponding to an input image, e.g., a depth map, and store it in the memory 110. According to an embodiment, when a first frame and a second frame are sequentially input, the processor 120 may sequentially obtain a first depth map and a second depth map corresponding to the first frame and the second frame while applying pre-processing and/or post-processing for the first frame and the second frame, and store them in the memory 110.

According to an embodiment, the processor 120 may obtain a depth map of the first frame and the second frame based on various image processing methods, e.g., an algorithm, a formula, a network model, etc.

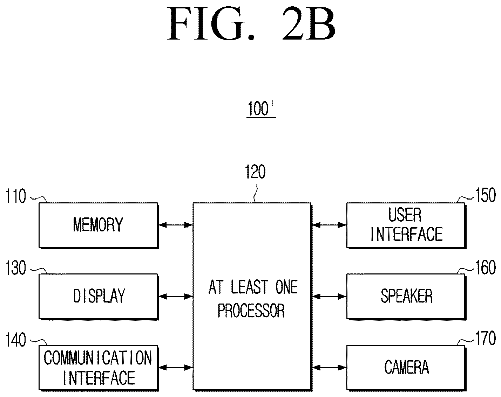

FIG. 2B is a block diagram illustrating an example configuration of an electronic apparatus according to various embodiments.

According to FIG. 2B, an electronic apparatus 100' may include memory 110, at least one processor 120, a display 130, a communication interface 140, a user interface 150, a speaker 160, and a camera 170. Among the components illustrated in FIG. 2B, regarding components overlapping with the components illustrated in FIG. 2A, detailed explanation will be omitted.

The display 130 may be implemented as a display including self-luminous elements, or a display including non-self-luminous elements and a backlight. For example, the display 130 may be implemented as displays in various forms such as a liquid crystal display (LCD), an organic light emitting diodes (OLED) display, light emitting diodes (LED), micro LED, mini LED, a plasma display panel (PDP), a quantum dot (QD) display, quantum dot light emitting diodes (QLED), etc. Inside the display 130, driving circuits that may be implemented in forms such as an a-si TFT, a low temperature poly silicon (LTPS) TFT, an organic TFT (OTFT), etc., and a backlight unit, etc. may also be included together. According to an embodiment, on the front surface of the display 130, a touch sensor that has a form such as a touch film, a touch sheet, a touch pad, etc. and detects a touch operation may be arranged and implemented to detect various types of touch inputs. For example, the display 130 may detect various types of touch inputs such as a touch input by a user's hand, a touch input by an input device such as a stylus pen, a touch input by a specific electrostatic material, etc. Here, the input device may be implemented as an input device in a pen type that can be referred to as various terms such as an electronic pen, a stylus pen, an S-pen, etc. According to an embodiment, the display 130 may be implemented as a flat display, a curved display, a flexible display that can be folded and/or rolled, etc.

The communication interface 140 can obviously be implemented as various interfaces according to implementation examples of the electronic apparatus 100'. For example, the communication interface 140 may perform communication with an external device, an external storage medium (e.g., a USB memory), an external server (e.g., a webhard), etc. through communication methods such as Bluetooth, AP-based Wi-Fi (Wi-Fi, a wireless LAN network), Zigbee, a wired/wireless local area network (LAN), a wide area network (WAN), an Ethernet, the IEEE 1394, a high-definition multimedia interface (HDMI), a universal serial bus (USB), a mobile high-definition link (MHL), the Audio Engineering Society/European Broadcasting Union (AES/EBU), Optical, Coaxial, etc. Also, according to an embodiment, the communication interface 140 may perform communication with another electronic apparatus, an external server, and/or a remote control device, etc.

The user interface 150 may be implemented as a device such as a button, a touch pad, a mouse, and a keyboard, or may be implemented as a touch screen that can perform the aforementioned display function and a manipulation input function together, etc.

The speaker 160 may be a component that outputs not only various types of audio data but also various types of notification sounds or voice messages, etc. The processor 120 may control the speaker 160 to output feedbacks or various types of notifications according to the various embodiments of the disclosure in audio forms.

The camera 170 may be turned on according to a predetermined event and perform photographing. The camera 170 may convert a photographed image into an electric signal, and generate image data based on the converted signal. For example, the camera 170 may include at least one of a general (or basic) camera or a super wide angle camera.

Other than the above, the electronic apparatus 100' may include a sensor and a microphone, etc. according to implementation examples.

The sensor may include various types of sensors such as a touch sensor, a proximity sensor, an acceleration sensor (or a gravity sensor), a geomagnetic sensor, a gyro sensor, a pressure sensor, a position sensor, a distance sensor, an illumination sensor, etc.

The microphone is a component for receiving input of a user voice or other sounds, and converting them into audio data. According to an embodiment, the electronic apparatus 100' may receive a user voice input through an external device through the communication interface 140.

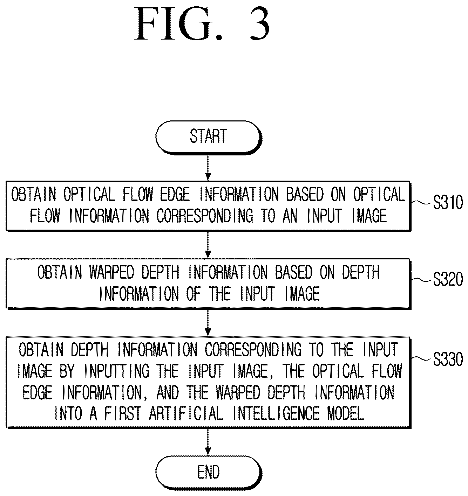

FIG. 3 is a flowchart illustrating an example method of obtaining depth information according to various embodiments.

According to FIG. 3, in operation 310, the electronic apparatus 100 may obtain optical flow edge information based on optical flow information corresponding to an input image.

The optical flow information may include movement information according to time that was obtained by tracking how each pixel moves in an image. For example, the optical flow information may include movement direction information and speed information of an object. For example, the optical flow information may be in a form of an optical flow map including optical flow values corresponding to each pixel, but is not limited thereto. The optical flow map may be a structure wherein optical flow values corresponding to each pixel block are arranged in a form of a matrix in pixel block units. In the disclosure, "a pixel block" may refer, for example, to a gathering of adjacent pixels including at least one pixel, and "a region" is a term referring to a portion of an image, and may refer, for example, to at least one pixel block or a gathering of pixel blocks.

The optical flow edge information may include movement information corresponding to an edge (or a boundary) of an object. For example, the optical flow edge information may include movement direction information and speed information of an object. The edge may be a region wherein pixel values that are spatially adjacent drastically change. For example, the edge may be a region wherein brightness of an image drastically changes from a low value to a high value or from a high value to a low value.

According to an embodiment, the electronic apparatus 100 may obtain optical flow edge information by differentiating optical flow information. For example, the electronic apparatus 100 may obtain optical flow edge information by applying a filter to optical flow information. For example, the electronic apparatus 100 may obtain a value obtained by applying a filter to optical flow information (or a filtered value, a filter value) as optical flow edge information.

According to an embodiment, the electronic apparatus 100 may obtain optical flow edge information based on a value obtained by differentiating the first derivative of the optical flow information and a value obtained by differentiating the second derivative of the optical flow information. For example, the electronic apparatus 100 may obtain optical flow edge information based on a value obtained by applying a first derivative filter to the optical flow information and a value obtained by applying a second derivative filter to the optical flow information. For example, the second derivative filter may include at least one of a Laplacian Filter, a Roberts filter, a Sobel filter, a directional filter, a gradient filter, a difference filter, or a Prewitte Filter.

According to an embodiment, the electronic apparatus 100 may obtain a first value by normalizing a first derivative value obtained by differentiating the first derivative of horizontal optical flow information, and obtain a second value by normalizing a second derivative value obtained by differentiating the second derivative of the horizontal optical flow information. Also, the electronic apparatus 100 may obtain a third value by normalizing a third derivative value obtained by differentiating the first derivative of vertical optical flow information, and obtain a fourth value by normalizing a fourth derivative value obtained by differentiating the second derivative of the vertical optical flow information. Then, the electronic apparatus 100 may obtain the optical flow edge information based on the first value, the second value, the third value, and the fourth value.

According to an embodiment, the electronic apparatus 100 may obtain the optical flow edge information based on a fifth value obtained by binarizing the first value, a sixth value obtained by binarizing the second value, a seventh value obtained by binarizing the third value, and an eighth value obtained by binarizing the fourth value. For example, the electronic apparatus 100 may obtain first optical flow edge information by applying an OR gate to the fifth value and the seventh value, and obtain second optical flow edge information by applying an OR gate to the sixth value and the eighth value. An OR gate is a kind of digital logic circuit, and if two inputs (assumed as A and B) are received and if just one of A and B is 1, the result becomes 1, and if both are 0, the result becomes 0.

Binarization may refer, for example, to various technologies used in digital image processing, and may convert a grayscale image into a black and white (binary) image. A grayscale image is an image wherein pixel values are expressed in a range of from 0 (a black color) to 255 (a white color), and a binary image is an image wherein each pixel is expressed as 0 or 1 which is one of just two kinds of values. Binarization may compare each pixel value of an image with a threshold, and convert a value bigger than the threshold into 1 (a white color), and a value smaller than the threshold into 0 (a black color).

For example, a first derivative signal gets to have a negative value or a positive value in an edge portion. Accordingly, the first optical flow edge information may include depth gradients (or depth value gradients) information. For example, a second derivative signal gets to have a characteristic of zero crossing wherein a sign is changed in an edge portion. Specifically, the second derivative signal gets to have a negative value in case a decreasing trend of an input signal becomes stronger or an increasing trend becomes weaker in an edge portion, and on the contrary, may have a positive value in case a decreasing trend of an input signal becomes weaker or an increasing trend becomes stronger in an edge portion. In other words, the second derivative signal gets to have a positive value on an internal boundary of a dark object, and a negative value on an external boundary, and gets to have a positive value on an external boundary of a bright object, and a negative value on an internal boundary. Accordingly, the second optical flow edge information may include information focused on object boundaries (or object outer boundaries). As a boundary may refer, for example, to an edge of which directivity is clear and straight, and/or an edge of which directivity is clear and has thickness greater than or equal to a threshold value, it may be distinguished from a complex edge of which directions are diverse. For example, a boundary may become a boundary of an object or a text, etc.

In operation 320, the electronic apparatus 100 may obtain warped depth information based on depth information of the input image. According to an embodiment, the electronic apparatus 100 may obtain warped depth information by warping depth information estimated in the previous frame to the current frame based on optical flow information corresponding to the current frame.

In operation 330, the electronic apparatus 100 may obtain depth information corresponding to the input image by inputting the input image, the optical flow edge information obtained in the operation 310, and the warped depth information obtained in the operation 320 into a first network model.

For example, the network model may be implemented as at least one model among a convolutional neural network (CNN), a deep neural network (DNN), a recurrent neural network (RNN), a long short term memory network (LSTM), gated recurrent units (GRU) or generative adversarial networks (GAN), a restricted Boltzmann machine (RBM), a deep belief network (DBN), a bidirectional recurrent deep neural network (BRDNN), or Deep Q-networks.

The feature that the network model is trained may refer, for example, to a process wherein a basic learning network model (e.g., an artificial intelligence model including any random parameters) adjusts parameter values from a viewpoint of optimizing an objective function using a plurality of training data by a learning algorithm, and may refer, for example, to a predefined operation rule or a learning network model set to perform a desired characteristic (or, purpose) being made. Such learning may be performed through a separate server and/or system, but is not limited thereto, and it may be performed in the electronic apparatus 100. As examples of learning algorithms, there are supervised learning, unsupervised learning, semi-supervised learning, or reinforcement learning, but learning algorithms are not limited to the aforementioned examples.

According to an embodiment, the electronic apparatus 100 may, while training of the first network model is proceeding, reduce depth estimation dependency for the optical flow edge information and the warped depth information by randomly dropping out at least one of optical flow edge information for training or warped depth information for training.

According to an embodiment, the electronic apparatus 100 may obtain camera pose information by inputting the previous frame, the current frame, and the next frame into a second network model, and train the first network model based on the obtained camera pose information. The camera pose information may include an external parameter of the camera.

According to an embodiment, the electronic apparatus 100 may obtain warped pose information through forward warping for the camera pose information, and obtain warped depth information through forward warping for the depth information corresponding to the input image. Then, the electronic apparatus 100 may synthesize the previous frame and the next frame based on the warped pose information and the warped depth information. Afterwards, the electronic apparatus 100 may train the parameter (or weight) of the first network model based on a first loss value between the previous frame and the synthesized previous frame and a second loss value between the next frame and the synthesized next frame.

Forward warping may include a method of moving an input image or each pixel of an object to a new location for generating a modified object or image, and moving of each pixel may be determined according to a form or a location of a modified object or image.

In FIG. 3, an order was mapped for all steps for the convenience of explanation, but it will be apparent that the order of steps is not limited can be performed in parallel, etc. is not necessarily limited to illustrated the order.

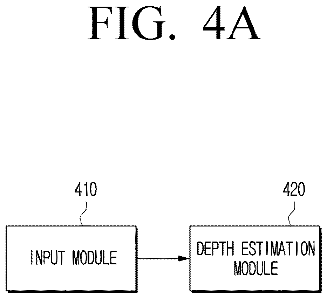

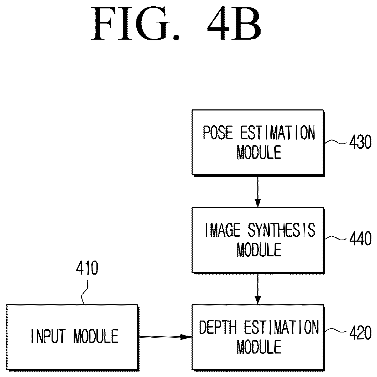

FIG. 4A and FIG. 4B are diagrams illustrating an example method of estimating depth according to various embodiments.

According to FIG. 4A, the electronic apparatus 100 may include an input module 410 and a depth estimation module 420. For example, each module may be implemented as at least one software, at least one hardware, and/or a combination thereof.

For example, at least one of the input module 410 or the depth estimation module 420 may be implemented to use a predefined algorithm, a predefined formula, and/or a trained network model. The input module 410 and the depth estimation module 420 may be included in the electronic apparatus 100, but according to an embodiment, they may be dispersed in at least one external device.

The input module 410 may process input information to be provided to the depth estimation module 420. According to an embodiment, the input information may include an input image, optical flow edge information, and warped depth information.

For example, the input module 410 may obtain optical flow edge information based on optical flow information corresponding to an input image. For example, the input module 410 may obtain optical flow edge information by performing edge filtering and binarization for optical flow information.

For example, the input module 410 may obtain warped depth information by warping depth information estimated in the previous frame to the current frame based on optical flow information corresponding to the current frame.

The depth estimation module 420 may estimate depth of the input image based on the input information provided from the input module 410. According to an embodiment, the depth estimation module 420 may obtain depth information estimated by inputting the input image, the optical flow edge information, and the warped depth information into the trained first network model.

Referring to FIG. 4B, the electronic apparatus 100 may include an input module 410, a depth estimation module 420, a pose estimation module 430, and an image synthesis module 440. For example, each module may be implemented as at least one software, at least one hardware, and/or a combination thereof.

For example, at least one of the input module 410, the depth estimation module 420, the pose estimation module 430, or the image synthesis module 440 may be implemented to use a predefined algorithm, a predefined formula, and/or a trained network model. The input module 410, the depth estimation module 420, the pose estimation module 430, and the image synthesis module 440 may be included in the electronic apparatus 100, but according to an embodiment, they may be dispersed in at least one external device.

The input module 410 may process input information to be provided to the depth estimation module 420. According to an embodiment, the input information may include an input image, optical flow edge information, and warped depth information.

The depth estimation module 420 may estimate depth of the input image based on the input information provided from the input module 410. According to an embodiment, the depth estimation module 420 may obtain depth information estimated by inputting the input image, the optical flow edge information, and the warped depth information into the trained network model.

The pose estimation module 430 may obtain camera pose information, and provide the information to the depth estimation module 420. According to an embodiment, the pose estimation module 430 may obtain camera pose information by inputting the previous frame, the current frame, and the next frame into the second network model.

The depth estimation module 420 may train the first network model based on the camera pose information provided from the pose estimation module 430.

The image synthesis module 440 may synthesize the previous frame and the next frame based on warped pose information and warped depth information. The synthesized frame may be used in training the parameter of the first network model.

According to an embodiment, the image synthesis module 440 may obtain warped pose information through forward warping for the camera pose information, and obtain warped depth information through forward warping for the depth information corresponding to the input image. The image synthesis module 440 may synthesize the previous frame and the next frame based on the warped pose information and the warped depth information. For example, the synthesized frame may be used in training the parameter of the first network model based on a first loss value between the previous frame and the synthesized previous frame and a second loss value between the next frame and the synthesized next frame.

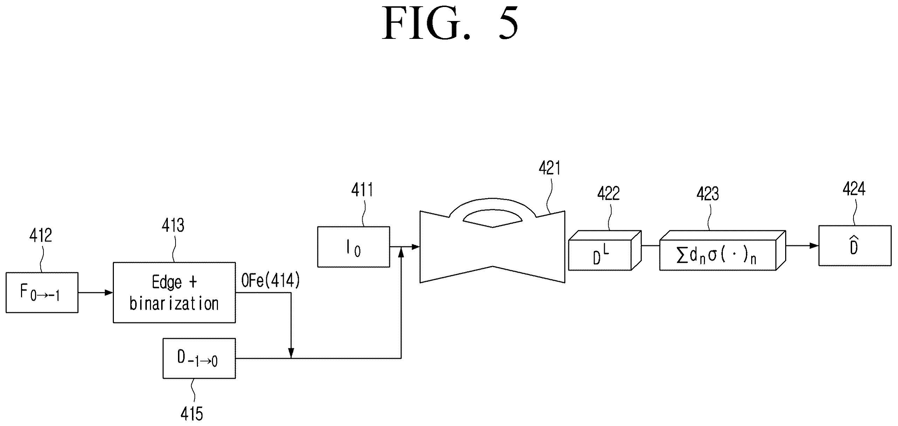

FIG. 5 is a diagram illustrating an example operation of an electronic apparatus according to various embodiments.

According to FIG. 5, the electronic apparatus 100 may obtain optical flow edge information 414 by performing edge filtering and binarization 413 for optical flow ($F_{0 \rightarrow -1}$) 412 from the previous frame ($I_{-1}$) to the current frame ($I_0$) 411.

According to an embodiment, the electronic apparatus 100 may use the current frame ($I_0$) 411 of the input image, the optical flow edge information 414, and the warped depth information ($D_{-1 \rightarrow 0}$) 415 as input of the first network model 421.

According to an embodiment, the electronic apparatus 100 may obtain depth estimation volume ($D^L$) (or depth probability logits) 422 by inputting the current frame ($I_0$) 411 of the input image, the optical flow edge information 414, and the warped depth information ($D_{-1 \rightarrow 0}$) 415 into the first network model 421.

According to an embodiment, the electronic apparatus 100 may obtain a final estimated depth map ($D^\wedge$) 424 by performing a weighted sum 423 of the depth estimation volume ($D^L$) 422. According to an embodiment, the electronic apparatus 100 may obtain the final estimated depth map ($D^\wedge$) 424 by applying a Sigmoid function to a single channel output $D^L$ and scaling it within a predetermined range. For example, the electronic apparatus 100 may obtain the final estimated depth map ($D^\wedge$) 424 by performing Sigmoid $\sigma(\cdot)$ activation for the single channel output $D^L$ and scaling it within a min-max disparity range. A Sigmoid function has a curve in an S shape that converts an input value into a value between 0 and 1, and may limit a range of an input value through this and interpret an output as a probability. A Sigmoid function may output a value close to 0 if an input value is a big negative number, and output a value close to 1 if an input value is a big positive number.

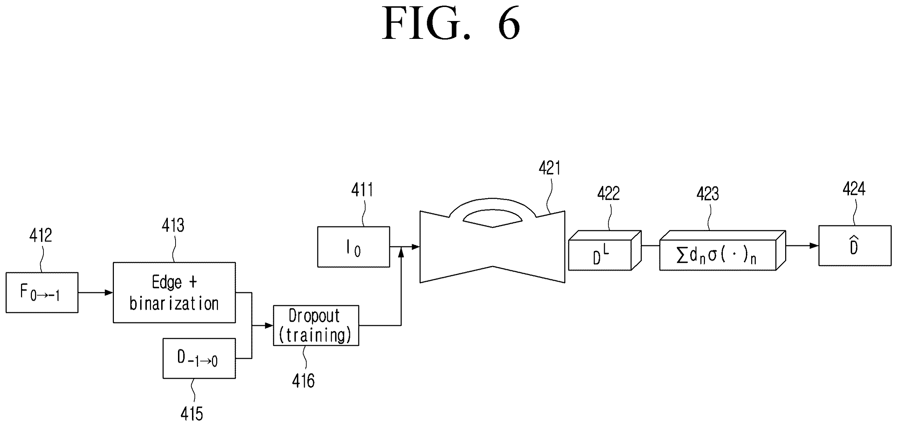

FIG. 6 is a diagram illustrating an example operation of an electronic apparatus according to various embodiments.

According to the example illustrated in FIG. 6, while training of the first network model 421 is proceeding, the electronic apparatus 100 may randomly drop out at least one of the optical flow edge information 416 or the warped depth information ($D_{-1 \rightarrow 0}$) 415 without always inputting it into the first network model 421. This is for preventing/reducing depth estimation of the first network model 421 from being overly dependent on the optical flow edge information.

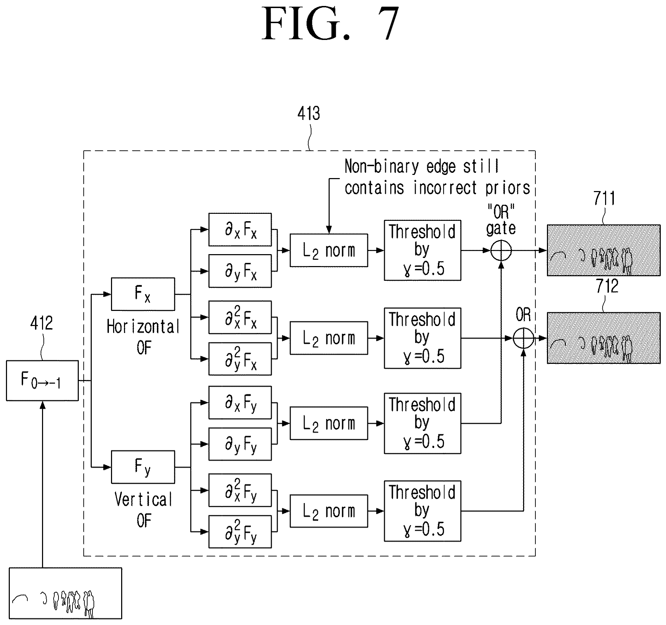

FIG. 7 is a diagram illustrating an example method of obtaining optical flow edge information according to various embodiments.

According to the example illustrated in FIG. 7, the electronic apparatus 100 may obtain optical flow edge information 711, 712 by performing edge filtering and binarization 413 based on the optical flow information 412.

According to an embodiment, the electronic apparatus 100 may obtain the optical flow edge information 711, 712 based on a value obtained by differentiating the first derivative of the optical flow information 412 and a value obtained by differentiating the second derivative of the optical flow information 412.

According to an embodiment, the electronic apparatus 100 may obtain horizontal optical flow information (referred to as Horizontal OF, $F_x$ hereinafter) and vertical optical flow information (referred to as Vertical OF, $F_y$ hereinafter) included in the optical flow information 412.

According to an embodiment, the electronic apparatus 100 may obtain a first derivative value $\partial_x F_x$ and $\partial_y F_x$ by differentiating the first derivative of $F_x$. Also, the electronic apparatus 100 may obtain a second derivative value $\partial^2_x F_x$ and $\partial^2_y F_x$ by differentiating the second derivative of $F_x$.

According to an embodiment, the electronic apparatus 100 may obtain a third derivative value $\partial_x F_y$ and $\partial_y F_y$ by differentiating the first derivative of $F_y$. Also, the electronic apparatus 100 may obtain a fourth derivative value $\partial^2_x F_y$ and $\partial^2_y F_y$ by differentiating the second derivative of $F_y$.

According to an embodiment, the electronic apparatus 100 may obtain a first value ($L_2$ norm) by normalizing the first derivative value $\partial_x F_x$ and $\partial_y F_x$.

According to an embodiment, the electronic apparatus 100 may obtain a second value ($L_2$ norm) by normalizing the second derivative value $\partial^2_x F_x$ and $\partial^2_y F_x$.

According to an embodiment, the electronic apparatus 100 may obtain a third value ($L_2$ norm) by normalizing the third derivative value $\partial_x F_y$ and $\partial_y F_y$.

According to an embodiment, the electronic apparatus 100 may obtain a fourth value ($L_2$ norm) by normalizing the fourth derivative value $\partial^2_x F_y$ and $\partial^2_y F_y$.

In this case, non-binary edges such as the first value ($L_2$ norm), the second value ($L_2$ norm), the third value ($L_2$ norm), and the fourth value ($L_2$ norm) may still include incorrect priors (or prior distribution).

According to an embodiment, the electronic apparatus 100 may obtain a fifth value by binarizing the first value ($L_2$ norm). For example, the electronic apparatus 100 may obtain the fifth value by binarizing the first value ($L_2$ norm) by a threshold value $\gamma = 0.5$. For example, the fifth value may have 0 or 1.

According to an embodiment, the electronic apparatus 100 may obtain a sixth value by binarizing the second value ($L_2$ norm). For example, the electronic apparatus 100 may obtain the sixth value by binarizing the second value ($L_2$ norm) by the threshold value $\gamma = 0.5$. For example, the sixth value may have 0 or 1.

According to an embodiment, the electronic apparatus 100 may obtain a seventh value by binarizing the third value ($L_2$ norm). For example, the electronic apparatus 100 may obtain the seventh value by binarizing the third value ($L_2$ norm) by the threshold value $\gamma = 0.5$. For example, the seventh value may have 0 or 1.

According to an embodiment, the electronic apparatus 100 may obtain an eighth value by binarizing the fourth value ($L_2$ norm). For example, the electronic apparatus 100 may obtain the eighth value by binarizing the fourth value ($L_2$ norm) by the threshold value $\gamma = 0.5$. For example, the eighth value may have 0 or 1.

According to an embodiment, the electronic apparatus 100 may obtain first optical flow edge information by applying an OR gate to the fifth value and the seventh value. When an OR gate is applied, if just one of the fifth value and the seventh value is 1, the result becomes 1, and if both are 0, the result becomes 0. The first optical flow edge information is information based on first differentiation, and may include depth gradients information.

According to an embodiment, the electronic apparatus 100 may obtain second optical flow edge information by applying an OR gate to the sixth value and the eighth value. When an OR gate is applied, if just one of the sixth value and the eighth value is 1, the result becomes 1, and if both are 0, the result becomes 0. The second optical flow edge information is information based on second differentiation, and may include information focused on object boundaries.

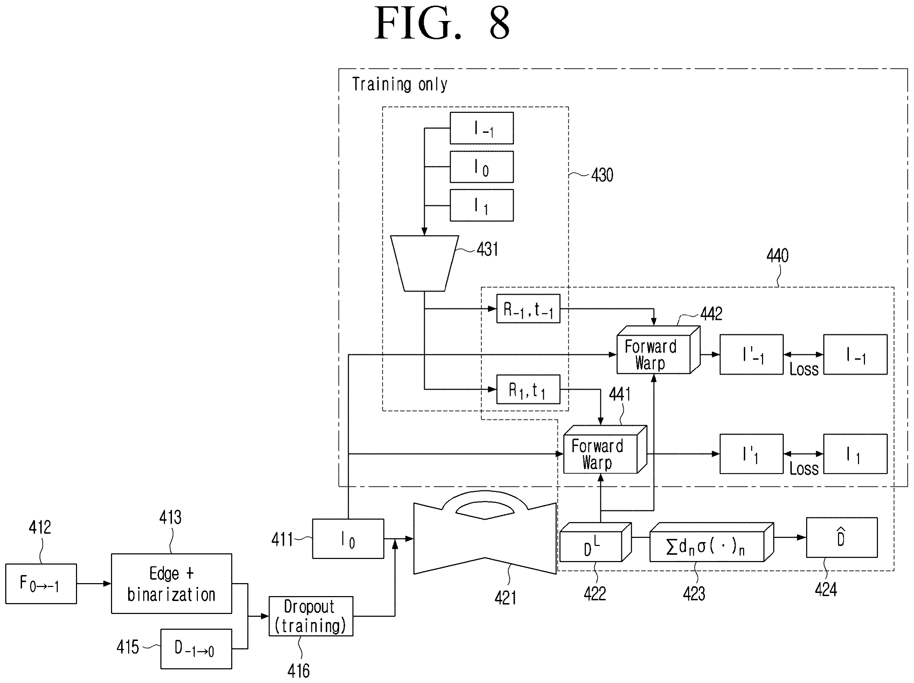

FIG. 8 is a diagram illustrating an example method of obtaining depth information according to various embodiments.

According to an embodiment, the first network model 421 may be a model trained to estimate depth information of each pixel in an image or a video. The first network model 421 may be implemented as a deep learning model for estimating depth information, and a core structure of such a deep learning model may be referred to as a backbone.

According to FIG. 8, the first network model 421 may be trained by exchanging information with the pose estimation module 430 and the image synthesis module 440.

According to an embodiment, the first network model 421 may be implemented as an Encoder-Decoder Architecture and Residual Networks (ResNets).

According to an Encoder-Decoder Architecture, the first network model 421 may include an encoder and a decoder. The encoder may extract a high-level feature of an input image, and the decoder may generate a depth map using such a feature.

According to an embodiment, the encoder may be implemented as a ResNet encoder. For example, the encoder may be implemented as a ResNet-34 encoder, but is not limited thereto. A ResNet-34 encoder may be initialized with a pre-trained weight in image classification of an ImageNet.

According to an embodiment, the decoder may be implemented as a convolution decoder having skip connections, but is not limited thereto. According to an embodiment, the decoder may be trained from the first through Kaiming Normal initialization.

According to an embodiment, the first network model 421 may be implemented to include a ResNet convolution encoder and an Upsample-Conv3x3Elu-Skip-Conv3x3Elu decoder. After each Upsample-Conv3x3 task, the number of channels may be reduced to half, and the final network output of the input resolution may be obtained through an additional Upsample-Conv3x3Elu-Conv3x3 stage.

According to an embodiment, the first network model 421 may be trained to output a depth estimation volume ($D^L$) (or depth probability logits) 422 if the current frame ($I_0$) 411 of the input image, the optical flow edge information 414, and the warped depth information ($D_{-1 \to 0}$) 415 are input.

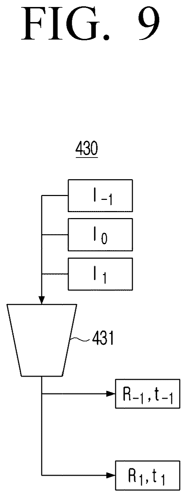

FIG. 9 is a diagram illustrating an example operation of a pose estimation module according to various embodiments.

According to an embodiment, as illustrated in FIG. 9, a pose estimation block 430 may perform a pose estimating operation using the second network model 431. For example, the second network model 431 may be implemented as a convolution encoder, but is not limited thereto.

The second network model 431 may use three consecutive frames as input. For example, the three consecutive frames may include the previous frame $I_{-1}$, the current (or center) frame $I_0$, and the next frame $I_1$.

The second network model 431 may output an extrinsic parameter of a camera pose based on the three consecutive frames. The extrinsic parameter of a camera pose may output the location of the camera and direction information. The location of the camera and the direction information indicate where the camera is located in the world coordinate system and which direction the camera is toward, and may mainly be expressed as rotation and movement. For example, the extrinsic parameter may include a rotation vector (or a rotation matrix) and a translation vector. For example, in FIG. 9, the second network model 431 may output a rotation vector R and a translation vector t. For example, the second network model 431 may output a first vector $(R_{-1}, t_{-1})$ based on the previous frame $I_{-1}$ and the current frame $I_0$, and a second vector $(R_1, t_1)$ based on the current frame $I_0$ and the next frame $I_1$.

According to an embodiment, camera pose estimation is necessary only during training, and may be inactivated in inference.

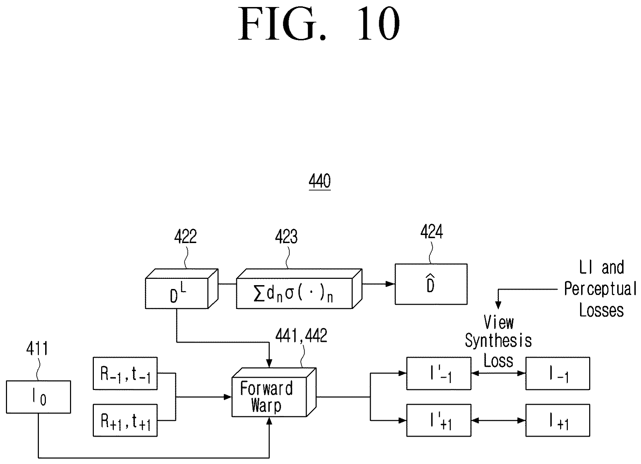

FIG. 10 is a diagram illustrating an example operation of an image synthesis module according to various embodiments.

According to an embodiment, as illustrated in FIG. 10, the image synthesis module 440 may perform an image synthesizing operation using forward warping.

The image synthesis module 440 may obtain a synthesized image Ic based on a depth estimation volume ($D^L$), extrinsic parameters [Rt, tt] of a camera pose, and intrinsic parameters K of a camera pose. For example, the intrinsic parameters may include a focal length, an optical center, and lens distortion parameters. The focal length of the camera lens determines how big a field of vision can be captured at the image sensor, and as the focal length is shorter, the field of view may become wider, and as the focal length is longer, the field of view may become narrower. The optical center is a center point of the lens, and may coincide with the center of the image sensor.

According to an embodiment, the image synthesis module 440 may obtain a synthesized image $I'_{-1}$, $I'_{+1}$ by performing forward warping of the input image $I_0$, the pose vectors $(R_{-1}, t_{-1})$ and $(R_1, t_1)$ obtained using the pose estimation module 430, and the depth estimation volume ($D^L$).

According to an embodiment, the synthesized image Ic may be obtained based on the following formula 1.

$$【\text{Formula 1}】$$

$$I_c = \sum_{n-1}^{N} g(I, d_n, R_c, t_c, K) D_n^P$$

Here, $D^P$ may be defined as in the formula 2.

$$【\text{Formula 2}】$$

$$D^P = \sigma(\{g(D_n^L, d_n, R_c, t_c, K)\}_{n=1}^{N})$$

$\sigma$ may be a channel-wise softmax. N may be No. of an inverse depth level. $g(\cdot)$ may be a warping function. For example, $g(\cdot)$ may be a backward warping function that lifts a hypothetical depth plane $d_n$ in 3D, moves and rotates 3D points by $R_c/t_c$, and warps I or $D_n^L$ by bilinear or bicubic interpolation. Backward warping may be a method of mapping each pixel of an output image to a location in an input image or an object.

$d_n$ may be defined as in the formula 3.

$$【\text{Formula 3}】$$

$$d_n = d_{max} e^{\log\left(\frac{d_{max}}{d_{min}}\right)\left(\frac{n}{N-1}-1\right)} \text{ (Exponentially quantized)}$$

According to an embodiment, the image synthesis module 440 may train the first network model 421 based on synthesized images $I'_{-1}$ and $I'_{+1}$ and corresponding input images $I_{-1}$ and $I_{+1}$.

According to an embodiment, the first network model 421 may be trained (or optimized) such that a loss between the synthesized image $I'_{-1}$ and the corresponding input image $I_{-1}$, and a loss between the synthesized image $I'_{+1}$ and the corresponding input image $I_{+1}$ are minimized/reduced.

According to an embodiment, the first network model 421 may be trained based on total objective loss functions as in the following formula 4.

$$【\text{Formula 4}】$$

$$l = l_{syn}^{-1} + l_{syn}^{+1} + \alpha_{ds} l_{ds}$$

Here, $\alpha_{ds}$ may be empirically set so as to have small contributions for $I^A_{rec}$ and $I^B_{rec}$.

The total loss I includes synthesis losses between the previous synthesized image and the next synthesized image, and corresponding ground images, and may be a combination of a perceptual loss and an L1 loss. For example, a perceptual loss is one of loss functions used in deep learning, and is one of methods of measuring a difference between an original image and a generated image. A perceptual loss may preserve a content and a style of an image. A content loss may measure overall similarity between two images, and a style loss may measure a difference in visual features such as textures, colors, and patterns between two images. An L1 loss is one of loss functions used in deep learning, and may also be referred to as a mean absolute error (MAE). An L1 loss may measure an absolute error between an actual value and a predicted value, and train a model by the size of the error.

According to an embodiment, the first network model 421 may be additionally trained based on a photometric reconstruction loss.

According to an embodiment, the first network model 421 may be additionally trained based on a photometric reconstruction loss as in the formula 5. According to an embodiment, a photometric reconstruction loss (a mean between two reference frames A and B) may be a combination of L1 and a perceptual loss.

【Formula 5】

$$ l_{syn} = \| O_c \odot (I^{i}_{c} - I_c) \|_1 + \alpha_p \sum_{l=1}^{3} \| \phi^{l}(I^0_c) - \phi^{l}(I_c) \|^2_2 $$

Here, $\odot$ may indicate a Hadamard product, and $O_c$ may be a moving object and an occlusion mask. $\alpha_p$ may be set as an experience value for striking an approximate balance. $\phi^1$ is the pre-trained first layer, and may enable comparison of a synthesized image and a ground truth (GT) image in a deep feature space through a perceptual loss.

According to an embodiment, the first network model 421 may be additionally trained based on a loss that guides the first network model 421 to generate smooth disparity (or smooth disparity maps) on an image edge (e.g., a smoothness loss). A smoothness loss is one of loss functions, and may be used in training a model to maintain smoothness in an image. For example, a smoothness loss may promote smoothness in an image, and minimize/reduce changes between each pixel in an image. Through this, the smoothness loss may make a generated image or a converted image have smooth texture which is natural and wherein there are no excessive noises or local fluctuations.

According to an embodiment, the first network model 421 may be additionally trained based on a smoothness loss as in the formula 6.

【Formula 6】

$$ l_{sm} = \| \partial_x \hat{D} \odot e^{-|\partial x|} \|_1 + \| \partial_y \hat{D} \odot e^{-|\partial y|} \|_1 $$

Here, $\partial x$ and $\partial y$ may indicate an image gradient by an edge-aware smoothness loss. An edge-aware smoothness loss is one of loss functions, and may be used in preserving an edge while maintaining smoothness of an image. For example, an edge-aware smoothness loss is calculated in consideration of a gradient between adjacent pixels, and in case a gradient between adjacent pixels is big (e.g., an edge area), the edge may be preserved by making the loss become smaller, and in case a gradient between adjacent pixels is small (e.g., in case it is not an edge area), smoothness may be maintained as the loss increases.

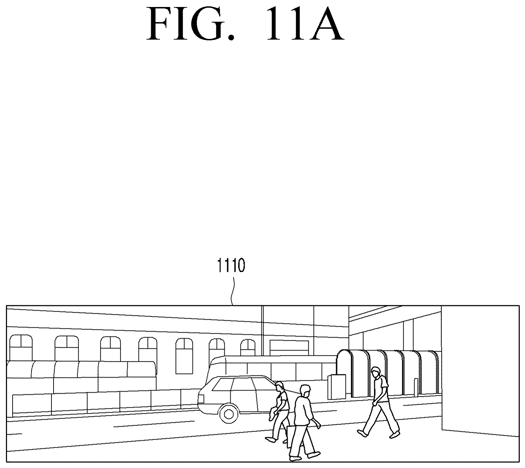

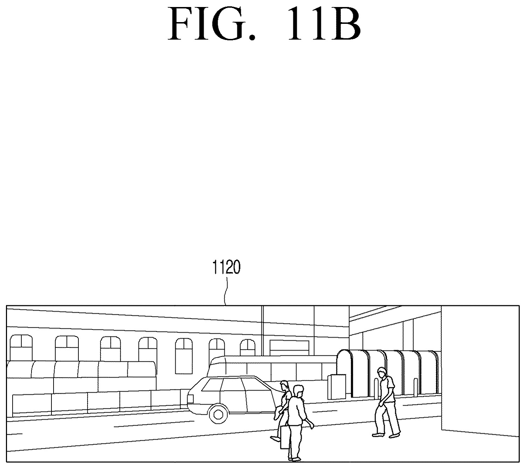

FIGS. 11A, 11B 11C, 12A, 12B and 12C are diagrams illustrating an example effect according to various embodiments.

FIG. 11A illustrates an input image 1110 according to an embodiment.

FIG. 11B illustrates a reference image 1120 for obtaining overflow information according to an embodiment.

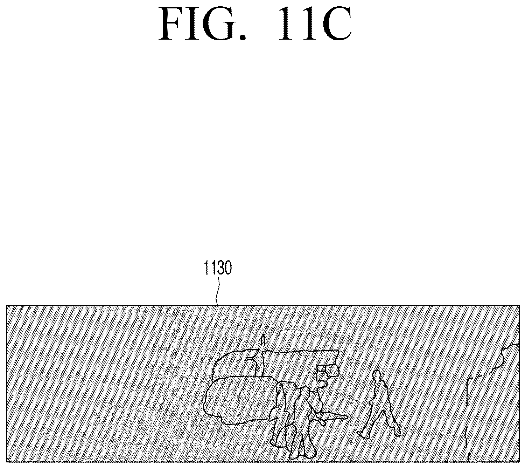

FIG. 11C illustrates overflow edge information 1130 obtained based on the input image 1110 and the reference image 1120 according to an embodiment.

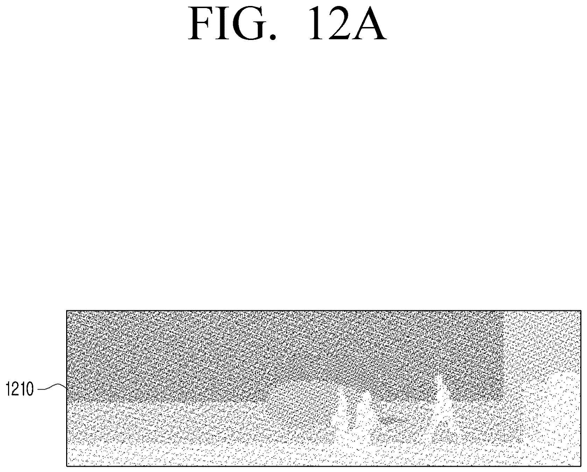

FIG. 12A illustrates first depth estimation information 1210 obtained by inputting an input image, overflow edge information, and warped depth information into the first network model according to an embodiment.

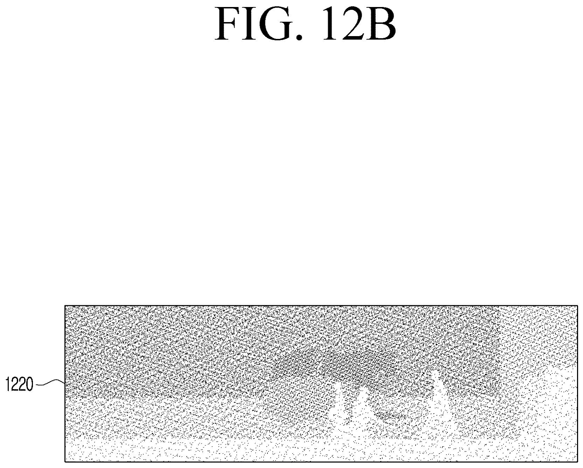

FIG. 12B illustrates second depth estimation information 1220 obtained by inputting an input image and overflow edge information into the first network model according to an embodiment.

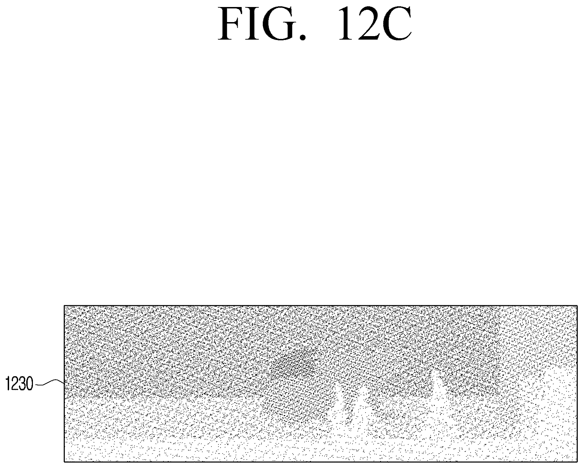

FIG. 12C illustrates third depth estimation information 1230 obtained by inputting an input image into the first network model according to an embodiment.

According to FIG. 12A to FIG. 12C, it can be identified that the first depth estimation information 1210 obtained according to an embodiment of the disclosure is a more consistent depth map in terms of time and space compared with the second depth estimation information 1220 and the third depth estimation information 1230.

According to the aforementioned various embodiments, using an optical flow as input of a network, performance of the network can be improved, and accuracy of depth estimation can be improved.

Methods according to the aforementioned various embodiments of the disclosure may be implemented just with software upgrade, or hardware upgrade for a conventional electronic apparatus and/or a server.

The aforementioned various embodiments of the disclosure may be performed through an embedded server provided on an electronic apparatus, or an external server of an electronic apparatus.

According to an embodiment of the disclosure, the aforementioned various embodiments may be implemented as software including instructions stored in machine-readable storage media, which can be read by machines (e.g.: computers). The machines refer to devices that call instructions stored in a storage medium, and can operate according to the called instructions, and the devices may include an electronic apparatus according to the aforementioned embodiments (e.g.: an electronic device A). In case an instruction is executed by a processor, the processor may perform a function corresponding to the instruction by itself, or using other components under its control. An instruction may include a code that is generated or executed by a compiler or an interpreter. A storage medium that is readable by machines may be provided in the form of a non-transitory storage medium. Here, the 'non-transitory' storage medium may not include signals, and is tangible, but does not indicate whether data is stored in the storage medium semi-permanently or temporarily.

According to an embodiment of the disclosure, the methods according to the aforementioned various embodiments may be provided while being included in a computer program product. A computer program product refers to a product, and it can be traded between a seller and a buyer. A computer program product can be distributed in the form of a storage medium that is readable by machines (e.g.: compact disc read only memory (CD-ROM)), or distributed on-line through an application store (Play Store™). In the case of on-line distribution, at least a portion of a computer program product may be stored in a storage medium such as the server of the manufacturer, the server of the application store, and the memory of the relay server at least temporarily, or may be generated temporarily.

Each of the components (e.g.: a module or a program) according to the aforementioned various embodiments may include a singular object or a plurality of objects. Further, among the aforementioned corresponding sub components, some sub components may be omitted, or other sub components may be further included in the various embodiments. Alternatively or additionally, some components (e.g.: a module or a program) may be integrated as an object, and perform functions that were performed by each of the components before integration identically or in a similar manner. Also, operations performed by a module, a program, or other components according to the various embodiments may be executed sequentially, in parallel, repetitively, or heuristically. Or, at least some of the operations may be executed in a different order or omitted, or other operations may be added.

While various example embodiments of the disclosure have been shown and described, the disclosure is not limited to the aforementioned embodiments, and it is apparent that various modifications may be made by those of ordinary skill in the technical field to which the disclosure belongs, without departing from the gist of the disclosure including the appended claims. It is intended that such modifications are not to be interpreted independently from the technical idea or prospect of the disclosure.

## Claims

1. An electronic apparatus comprising:

   memory storing at least one instruction; and
   at least one processor,
   wherein the at least one processor is configured to, by executing the at least one instruction:

   obtain optical flow edge information based on optical flow information corresponding to an input image,
   obtain warped depth information based on depth information of the input image, and
   obtain depth information corresponding to the input image by inputting the input image, the optical flow edge information, and the warped depth information into a first network model.

2. The electronic apparatus of claim 1,
   wherein the at least one processor is configured to, by executing the at least one instruction:
   obtain the optical flow edge information based on a value obtained by differentiating the first derivative of the optical flow information and a value obtained by differentiating the second derivative of the optical flow information.

3. The electronic apparatus of claim 2,

wherein the at least one processor is configured to, by executing the at least one instruction:

obtain a first value by normalizing a first derivative value obtained by differentiating the first derivative of horizontal optical flow information,
obtain a second value by normalizing a second derivative value obtained by differentiating the second derivative of the horizontal optical flow information,
obtain a third value by normalizing a third derivative value obtained by differentiating the first derivative of vertical optical flow information,
obtain a fourth value by normalizing a fourth derivative value obtained by differentiating the second derivative of the vertical optical flow information, and
obtain the optical flow edge information based on the first value, the second value, the third value, and the fourth value.

4. The electronic apparatus of claim 3,
wherein the at least one processor is configured to, by executing the at least one instruction:
obtain the optical flow edge information based on a fifth value obtained by binarizing the first value, a sixth value obtained by binarizing the second value, a seventh value obtained by binarizing the third value, and an eighth value obtained by binarizing the fourth value.

5. The electronic apparatus of claim 4,
wherein the at least one processor is configured to, by executing the at least one instruction:

obtain first optical flow edge information by applying an OR gate to the fifth value and the seventh value, and
obtain second optical flow edge information by applying an OR gate to the sixth value and the eighth value, and
wherein:
the first optical flow edge information comprises:

depth gradients information, and
the second optical flow edge information comprises:
information focused on object boundaries.

6. The electronic apparatus of claim 1,
wherein the at least one processor is configured to, by executing the at least one instruction:
obtain the warped depth information by warping depth information estimated in the previous frame to the current frame based on optical flow information corresponding to the current frame.

7. The electronic apparatus of claim 1,
wherein the at least one processor is configured to, by executing the at least one instruction:
while training of the first network model, reduce depth estimation dependency for the optical flow edge information and the warped depth information by randomly dropping out at least one of optical flow edge information for training or warped depth information for training.

8. The electronic apparatus of claim 1,
wherein the at least one processor is configured to, by executing the at least one instruction:

obtain camera pose information by inputting the previous frame, the current frame, and the next frame into a second network model, and
train a parameter of the first network model based on the obtained camera pose information.

9. The electronic apparatus of claim 8,
wherein the at least one processor is configured to, by executing the at least one instruction:

obtain warped pose information through forward warping for the camera pose information,
obtain warped depth information through forward warping for the depth information corresponding to the input image, and
train the parameter of the first network model based on the warped pose information and the warped depth information.

**10.** The electronic apparatus of claim 9,
wherein the at least one processor is configured to, by executing the at least one instruction:

synthesize the previous frame and the next frame based on the warped pose information and the warped depth information, and
train the parameter of the first network model based on a first loss value between the previous frame and the synthesized previous frame and a second loss value between the next frame and the synthesized next frame.

**11.** A method of controlling an electronic apparatus, the method comprising:

obtaining optical flow edge information based on optical flow information corresponding to an input image;
obtaining warped depth information based on depth information of the input image; and
obtaining depth information corresponding to the input image by inputting the input image, the optical flow edge information, and the warped depth information into a first network model.

**12.** The method of claim 11,
wherein the obtaining the optical flow edge information comprises:
obtaining the optical flow edge information based on a value obtained by differentiating the first derivative of the optical flow information and a value obtained by differentiating the second derivative of the optical flow information.

**13.** The method of claim 12,
wherein the obtaining the optical flow edge information comprises:

obtaining a first value by normalizing a first derivative value obtained by differentiating the first derivative of horizontal optical flow information;
obtaining a second value by normalizing a second derivative value obtained by differentiating the second derivative of the horizontal optical flow information;
obtaining a third value by normalizing a third derivative value obtained by differentiating the first derivative of vertical optical flow information;
obtaining a fourth value by normalizing a fourth derivative value obtained by differentiating the second derivative of the vertical optical flow information; and
obtaining the optical flow edge information based on the first value, the second value, the third value, and the fourth value.

**14.** The method of claim 13,
wherein the obtaining the optical flow edge information based on the first value, the second value, the third value, and the fourth value comprises:
obtaining the optical flow edge information based on a fifth value obtained by binarizing the first value, a sixth value obtained by binarizing the second value, a seventh value obtained by binarizing the third value, and an eighth value obtained by binarizing the fourth value.

**15.** A non-transitory computer-readable medium storing computer instructions that, when executed by a processor of an electronic apparatus, cause the electronic apparatus to perform operations,
comprising:

obtaining optical flow edge information based on optical flow information corresponding to an input image;
obtaining warped depth information based on depth information of the input image; and
obtaining depth information corresponding to the input image by inputting the input image, the optical flow edge information, and the warped depth information into a first network model.

# FIG. 1A

# FIG. 1B

# FIG. 2A

100

110                 120

| MEMORY | ←→ | AT LEAST ONE PROCESSOR |

# FIG. 2B

100'

120

110 — MEMORY

130 — DISPLAY

140 — COMMUNICATION INTERFACE

AT LEAST ONE PROCESSOR

150 — USER INTERFACE

160 — SPEAKER

170 — CAMERA

# FIG. 3

START

OBTAIN OPTICAL FLOW EDGE INFORMATION BASED ON OPTICAL FLOW INFORMATION CORRESPONDING TO AN INPUT IMAGE — S310

OBTAIN WARPED DEPTH INFORMATION BASED ON DEPTH INFORMATION OF THE INPUT IMAGE — S320

OBTAIN DEPTH INFORMATION CORRESPONDING TO THE INPUT IMAGE BY INPUTTING THE INPUT IMAGE, THE OPTICAL FLOW EDGE INFORMATION, AND THE WARPED DEPTH INFORMATION INTO A FIRST ARTIFICIAL INTELLIGENCE MODEL — S330

END

# FIG. 4A

410

420

INPUT MODULE → DEPTH ESTIMATION MODULE

# FIG. 4B

EP 4 734 057 A1

# FIG. 5

# FIG. 6

# FIG. 7

413

Non-binary edge still
contains incorrect priors

412

$F_{0 \rightarrow -1}$

$F_x$

Horizontal
OF

$F_y$

Vertical
OF

$\partial_x F_x$

$\partial_y F_x$

$\partial_x^2 F_x$

$\partial_y^2 F_x$

$\partial_x F_y$

$\partial_y F_y$

$\partial_x^2 F_y$

$\partial_y^2 F_y$

$L_2$ norm

$L_2$ norm

$L_2$ norm

$L_2$ norm

Threshold
by
$\gamma = 0.5$

Threshold
by
$\gamma = 0.5$

Threshold
by
$\gamma = 0.5$

Threshold
by
$\gamma = 0.5$

"OR"
gate

OR

711

712

**FIG. 8**

# FIG. 9

# FIG. 10

440

# FIG. 11A

1110

# FIG. 11B

1120

# FIG. 11C

1130

# FIG. 12A

1210

# FIG. 12B

1220

# FIG. 12C

1230

## INTERNATIONAL SEARCH REPORT

| | International application No. |
|---|---|
| | **PCT/KR2024/011623** |

**A. CLASSIFICATION OF SUBJECT MATTER**

**G06T 7/50**(2017.01)i; **G06T 7/269**(2017.01)i; **G06T 3/18**(2024.01)i; **G06T 7/13**(2017.01)i; **G06N 3/04**(2006.01)i; **G06T 7/593**(2017.01)i; **G06T 7/20**(2006.01)i

According to International Patent Classification (IPC) or to both national classification and IPC

**B. FIELDS SEARCHED**

Minimum documentation searched (classification system followed by classification symbols)

G06T 7/50(2017.01); G06K 9/00(2006.01); G06T 3/00(2006.01); H04N 13/00(2006.01); H04N 13/128(2018.01); H04N 13/282(2018.01); H04N 19/105(2014.01); H04N 19/577(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 광학 흐름 에지(optical flow edge), 카메라 포즈(camera pose), 와핑된 깊이 정보 (warping depth information), 깊이 추정(depth estimation), 네트워크 모델(network model)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2022-0129976 A (SAMSUNG ELECTRONICS CO., LTD. et al.) 26 September 2022 (2022-09-26)<br>See claims 11-12. | 1-2,6,8,11-12,15 |
| A | | 3-5,7,9-10,13-14 |
| Y | KR 10-2021-0116872 A (KOREA ADVANCED INSTITUTE OF SCIENCE AND TECHNOLOGY) 28 September 2021 (2021-09-28)<br>See paragraphs [0032], [0050] and [0099]; and claim 1. | 1-2,6,8,11-12,15 |
| Y | KR 10-2023-0011479 A (BEIJING DAJIA INTERNET INFORMATION TECHNOLOGY CO., LTD.) 20 January 2023 (2023-01-20)<br>See paragraph [0005]. | 2,12 |
| A | KR 10-2262832 B1 (INDUSTRY-ACADEMIC COOPERATION FOUNDATION, YONSEI UNIVERSITY) 08 June 2021 (2021-06-08)<br>See paragraph [0012]. | 1-15 |

☑ Further documents are listed in the continuation of Box C.    ☑ See patent family annex.

| | |
|---|---|
| *   Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **18 November 2024** | **18 November 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

International application No.

**PCT/KR2024/011623**

### C. DOCUMENTS CONSIDERED TO BE RELEVANT

| Category* | Citation of document, with indication, where appropriate, of the relevant passages | Relevant to claim No. |
|---|---|---|
| A | KR 10-2022-0071935 A (ELECTRONICS AND TELECOMMUNICATIONS RESEARCH INSTITUTE et al.) 31 May 2022 (2022-05-31)<br>See paragraphs [0015]-[0018]. | 1-15 |

Form PCT/ISA/210 (second sheet) (July 2022)

## INTERNATIONAL SEARCH REPORT
### Information on patent family members

International application No.

**PCT/KR2024/011623**

| Patent document cited in search report | | | Publication date (day/month/year) | Patent family member(s) | | | Publication date (day/month/year) |
|---|---|---|---|---|---|---|---|
| KR | 10-2022-0129976 | A | 26 September 2022 | US | 2022-0301190 | A1 | 22 September 2022 |
| KR | 10-2021-0116872 | A | 28 September 2021 | None | | | |
| KR | 10-2023-0011479 | A | 20 January 2023 | CN | 114342379 | A | 12 April 2022 |
| | | | | CN | 116320473 | A | 23 June 2023 |
| | | | | EP | 4018667 | A1 | 29 June 2022 |
| | | | | EP | 4018667 | A4 | 05 July 2023 |
| | | | | JP | 2022-536208 | A | 12 August 2022 |
| | | | | JP | 2023-036776 | A | 14 March 2023 |
| | | | | JP | 2023-179747 | A | 19 December 2023 |
| | | | | JP | 7199598 | B2 | 05 January 2023 |
| | | | | JP | 7372433 | B2 | 31 October 2023 |
| | | | | JP | 7538313 | B2 | 21 August 2024 |
| | | | | KR | 10-2022-0044832 | A | 11 April 2022 |
| | | | | KR | 10-2486982 | B1 | 10 January 2023 |
| | | | | US | 2022-0182659 | A1 | 09 June 2022 |
| | | | | WO | 2021-041332 | A1 | 04 March 2021 |
| KR | 10-2262832 | B1 | 08 June 2021 | WO | 2021-107254 | A1 | 03 June 2021 |
| KR | 10-2022-0071935 | A | 31 May 2022 | None | | | |

Form PCT/ISA/210 (patent family annex) (July 2022)